# EUROPEAN PATENT APPLICATION

(11) **EP 4 835 141 A1**
(43) Date of publication of application: **04.11.2026**
(21) Application number: 25173564.3
(22) Date of filing: 30.04.2025
(51) Int. Cl.: C25B 1/04, B01J 49/00, C02F 1/42, C25B 15/08

(54) **PROCESS AND APPARATUS FOR PRODUCING HYDROGEN BY ELECTROLYSIS OF WATER AND ELECTROLYSIS PLANT**

(71) Applicant: Linde GmbH, 82049 Pullach (DE)
(72) Inventor: Dietzen, Markus, 82049 Pullach (DE); Mansour, Amir, 82049 Pullach (DE); Fuchs, Thomas, 82049 Pullach (DE); Hoffmann, Frank, 44227 Dortmund (DE); Quasravie, Damon, 45239 Essen (DE)
(74) Representative: Gellner, Bernd

(57) **Abstract**

The invention concerns a process for producing hydrogen by electrolysis of water in an electrolysis plant and the respective electrolysis plant comprising multiple electrolysis stacks (17), each electrolysis stack comprising multiple electrolysis cells. A water polishing cycle (25, 7, 8,9, 11, 13, 16) comprises an ion exchange unit (10) comprising at least two mixed bed ion exchangers (10A, 10B) containing a mixture of two granular materials, an anion resin and a cation resin. According to the invention, anion and cation resin are regenerated on site by being automatically transported (33, 34, 35) from the mixed bed ion exchanger to be regenerated by a stream of demineralized water to a regeneration unit (30). After finishing regeneration or after emptying the mixed bed ion exchanger refilling the mixed bed ion exchanger (10A, 10B), the regenerated anion resin and regenerated cation resin are transported by demineralized water back to the mixed bed ion exchanger (10A, 10B) in regeneration.

## Description

The invention concerns a process for producing hydrogen by electrolysis of water according to the first part of claim 1.

A PEM electrolysis plant for the production of hydrogen and optionally oxygen from water is well known. Besides the electrolysis cells grouped into electrolysis stacks and optionally into electrolysis units there are various process steps handling the water around the electrolysis itself comprising a water polishing cycle for purifying water exiting the electrolysis modules. Such purification cycle has one or more ion exchange unit, each ion exchange unit comprising at least two mixed bed ion exchangers which contain a mixture of two granulate materials an anion resin and a cation resin. Such type of electrolysis is disclosed in WO 2020020611 A1.

In PEM electrolysis for hydrogen generation, corrosive demineralized water might corrode stainless steel equipment and dissolve steel-alloy components i.e. Cr, Ni, Co, Mo, Fe, etc. These traces of cations lead catalyze hydrogen peroxide generation at the PEMs which in turn increase decomposition reactions of the fluoridated Nafion membrane leading to fluoride release into the circulating demineralized water. The release of both cations and anions into the demineralized water increase the conductivity of the water (and decrease the resistivity of the water) and consequently increases the risk of a short circuit in the high voltage electrolysis cell and thereby ultimately influences the electrochemical boundary conditions for the PEM electrolysis. To minimize adverse effects the state-of-the-art approach is a conductivity limitation at less than 1,5 µS/cm currently achieved by a mixed bed polisher (MBP) ion exchange unit.

The release-rate of ions (e.g. fluoride) is higher during commissioning, i.e. in the first up to 500 hours of operation, and evens out to a constant release thereafter.

The maximum allowable fluoride concentration in the recirculating water is discussed as 50 or 100 ppb controlled as a limited conductivity of less than 1,5 µS/cm.

In large-scale PEM electrolysis systems, the fluoride ion concentration is controlled by polishing a certain percentage rate of approx. 3 to 6% side stream of the recirculating water over an MBP (mixed bed polisher ion exchange unit).

The design basis of the MBP is the flowrate of at least one of the following streams:
a) make-up demineralized water
b) condensate water from H2/H2O separator
c) main water loop

Frequently, all three streams are combined and sent to the MBP.

This set-up leads to the requirement of regular exchange of ion exchanger bed material.

Based on the high-purity requirements of the PEM Electrolysis, the design of the "polishing system", has a significant impact on equipment and operational effort.

Polishing at least one of the three water streams
a) make-up demineralized water
b) condensate water from H2/H2O separator
c) main water loop
leads to a central importance of the polishing unit (water polishing cycle) within large PEM plants.

The polishing cycle used in the invention is an open cycle, i.e. there are normally further feeds treated in that cycle, e.g. fresh water, transport water or other water streams.

In an exemplary large PEM electrolysis plant, 10 electrolysis modules each 10 MW, are combined with a centralized polishing system of 20 ion exchange vessels (MBPs, mixed bed polishers). The mixed bed ion exchangers of the ultrapure water system contain a mixture of granular cation resin and anion resin. The mixed bed ion exchanger resin must be treated, i.e. regenerated, on a regular basis.

In known PEM electrolysis plants, the MBPs must be dimensioned in such a way that they can be transported, both with the help of forklifts within the plant and in trucks for disposal or regeneration by a service provider. This also leads to special requirements regarding the accessibility and drivability of this part of the facility.

The regeneration of the MBPs is performed externally by a service provider residing at a remote place, which leads to major logistical effort and operational costs. The object of the invention is to reduce the logistical effort and/or the operational costs.

Such problem is solved in the invention by automizing the complete regeneration process by automatically performing all steps from transporting the granular materials from the mixed bed ion exchangers to the regeneration unit to transporting back the polished materials to the mixed bed ion exchangers and remix them, as described in the second part of claim 1.

The regeneration of ion exchange material from mixed bed ion exchangers (MBPs, Mixed Bed Polishers), which is normally carried out externally, can be fully and compactly integrated into the PEM electrolysis plant as an integrated process unit. This significantly reduces the total investment and operating costs per MW.

The regeneration unit of the invention is preferably used to regenerate the granular resin from all mixed bed ion exchangers of the PEM electrolysis. While the respective ion exchangers are integrated into the process of the PEM electrolysis modules, the regeneration unit works independently.

This requires communication between the controls of the PEM electrolysis and the control of the regeneration unit.

For switching from normal operation to regeneration mode, a mixed bed ion exchanger is passed from the PEM electrolysis control to the regeneration control unit. From this moment on, this mixed bed ion exchanger is exclusively controlled by the regeneration control unit. Access to this mixed bed ion exchanger by the PEM electrolysis control unit is blocked during regeneration mode.

Resin transfer between ultrapure water system and regeneration unit after the regeneration unit has taken over the control of a mixed bed ion exchanger, the program-controlled regeneration begins with the resin transfer from the mixed bed ion exchanger in question to the resin separation vessel of the regeneration unit.

The resin transfer takes place with the help of transport water from a tank. After the mixed bed resin has been transferred to a resin separation vessel, the emptied mixed bed ion exchanger is filled with regenerated cation and anion resin. The refill may be performed by the resin previously removed from the same ion exchanger, after their regeneration has been completed. Alternatively, there may be two storage vessels containing regenerated resins and the stored resins are used for refilling. The two variants may also be combined in the same plant.

The mixed bed ion exchange resin transferred to the resin separation vessel is separated based on the gravity difference between anion and cation resin. After the cation and anion resins have been separated, the anion resin from the resin separation vessel is transferred to the anion regeneration vessel using transport water where it is treated e.g. by HCl. Simultaneously, the cation resin may be regenerated in the separation vessel by introducing e.g. NaOH. Alternatively, the regeneration of the cation resin takes place in a separate cation regeneration vessel.

In a first embodiment of the invention, cation resin is transferred from the cation regeneration vessel to the empty mixed bed ion exchanger. Then the anion resin from the anion regeneration vessel is transferred to the same mixed bed ion exchanger The two resin types are mixed in the newly filled mixed bed ion exchanger using flushing air provided by a mixed air blower.

After the mixing is complete, the mixed bed thus created is pre-washed with fully demineralized water from a buffer tank via a demineralized water distributor pump in a program-controlled manner. The flushing wastewater that emerges from the mixed bed ion exchanger in question during this pre-wash is discharged towards the system boundary as wastewater to be discharged or reused if applicable. After the pre-wash, the circuit wash begins, during which the quality is monitored using the conductivity measurement assigned to the mixed bed ion exchanger in question. After the circuit wash is complete. The control of mixed bed ion exchanger in question is transferred back to the assigned ultrapure water system of the electrolyzer for to the use in normal operation.

In a second mode of the invention, regenerated anion and cation resin are mixed in the regeneration unit and commonly transported back to mixed be ion exchanger.

In the following, several advantages and further features of the invention are laid out in detail.
- For controlling and operating the ion exchanger process equipment and the equipment for regenerating the MBPs, a two-level configuration is applied comprising at least some of the following elements:
   - A common top platform with access to safety valves/control valves fittings for ion exchanger beds and the regeneration unit.
   - Common usage of maintenance access and platform(s) on one or more operating levels; such measure integrates the ion exchanger process equipment and the equipment for regenerating the MBPs, with access to control valves and other instrumentation including measuring sections of both process sections.
   - Storage tanks integrated as chemical tanks, designed as a compact structure for storage tanks for regeneration chemicals fully integrated and highly compact with usable volume of more than 30 m³ for NaOH and HCL with integrated unloading pumps, which operate independent of the type of tank truck delivering the chemicals.
   - Specification of modular subsystems and structuring of the subsystems including specifications regarding stackability and optimized degree of pre-assembly.
   - HCl Storage and usage, with HCl scrubbing for safe discharge of displaced gas during filling and combined use of HCl for cooling water conditioning and for regenerating the cation ion exchanger bed material.
   - Optimized arrangement of equipment in terms of media-related separation to optimize piping and minimize the legally required retention basins. This leads to a cost-optimized solution in accordance with the "Water Resources Act". Separated arrangement of HCl tanks in a separate room with separate ventilation including connection to a scrubber to optimize costs and space with the goal of staying below permissible limits.
   - Optimization of regeneration cycle times by adjusting the buffer volumes for demineralized water (reduction by approx. 5 hours).
   - Optimization of the Wastewater System: Two-stage neutralization with partial recycling from a first neutralization tank leading to save make-up of demineralized water and reduction of the load on the wastewater stream to the battery limit (first wastewater stream unpolluted).

The process steps for regeneration are preferably fully automated as described in claims 3 and 4. Such automation reduces the effort for regeneration considerably.
electrolysis stacks connected to a common water polishing cycle
the multiple electrolysis stacks grouped into electrolysis units each electrolysis unit comprising a portion of the multiple electrolysis stacks

In a particular embodiment of the invention, all the resin to be regenerated is directly sent to the regeneration unit and regenerated there, the same material after regeneration being transported back the mixed bed ion exchanger in regeneration mode for refilling. As alternative, only a portion or no portion the material removed from the mixed bed ion exchanger in regeneration mode is directly reused in the same the mixed bed ion exchanger may be taken from a buffer vessel by using the following steps:
- during emptying the mixed bed ion exchanger at least a portion of the anion resin and/or at least a portion of the cation resin taken from are introduced into a used anion buffer storage or into a used cation buffer storage respectively and/or
- during refilling the mixed bed ion exchanger at least a portion of the regenerated anion resin and/or at least a portion of the regenerated cation resin from a regenerated anion buffer storage or from a regenerated cation buffer storage respectively.

In a particular example, the used resins are not buffered, but the regenerated resins are taken from a buffer storage for anion and cation resins respectively. In that case, only two buffer storage vessels are needed.

In connection with the attached schematic drawings, further details of the invention are disclosed. The drawings show in particular:
- Figure 1: a process flow diagram of an electrolysis plant including the water polishing cycle and the regeneration system according to the invention and
- Figure 2: another process flow diagram giving an insight to a large plant according to the invention.

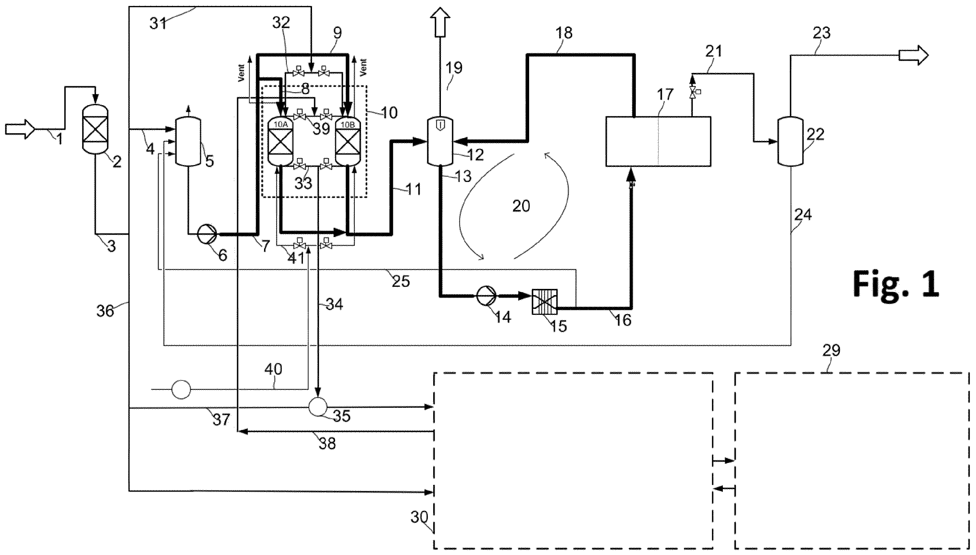

In Figure 1, fresh water 1, already demineralized or not, enters the electrolysis plant and is purified in 2. Purifier 2 may be any kind of water treatment apparatus like reverse osmosis, filtration, sea water desalination or a combination of those methods with different purification/polishing steps. At least a portion 4 of the respectively treated demineralized water 3 is introduced into a holding tank 5. Pump 6 transports demineralized water for holding and mixing tank 5 via lines 7, 8, 9 into the ion exchange unit 10 comprising for example two ion exchangers 10A, 10B, i.e. vessels containing ion exchange resins as described above, preferably in a lead and lag configuration. During normal operation, at least one of the ion exchangers is in operation for purifying the water. Purified water 11 from the ion exchanger unit 10 enters, as make-up water, the main water circuit 20 of the electrolysis via an O2/water separator 12. The main water circuit supplies the PEM stacks with water, which is then electrochemically split into O2 and H2 and, at the same time, carries the reaction heat of the electrolysis and thus prevents the overheating of the electrolysis stacks. Water 13 is pumped 14 in the main water circuit 20 through a heat exchanger 15 and line 16 either to an electrolysis unit comprising multiple electrolysis stacks or to multiple electrolysis units 17. In an embodiment, there is a single electrolysis unit 17 comprising e.g. 5 to 10 electrolysis stacks, possibly with 2 MW stack assembly systems. This means PEM electrolysis stacks, using an electrical power of approximately 2 MW, i.e. a current of around 3000A at a voltage of around 200V, to split water into oxygen and hydrogen. An oxygen-water mixture 18 is fed to the O2/H2O separator 12. Gaseous oxygen is withdrawn via line 19. The water circuit 20 between the O2/H2O separator 12 and the electrolysis unit(s) 17 is called the main process water loop 20. 1 to 10% of the water circulating in the main water circuit 20 is continuously sent back via line 25 to the demineralized water tank 5 to prevent an enrichment of stack degradation products in the main process water circuit 20. A hydrogen-water mixture 21 is fed into a hydrogen-H2O separator 22. Via line 23 hydrogen is withdrawn as a product. Separated water 24 is returned to the holding tank 5. Such operation is the normal operation of the electrolysis including the ion exchange unit. The line used in normal operation are shown in bold around the ion exchangers 10A and 10B.

During regeneration mode, at least at one of the ion exchangers (let's assume ion exchanger 10 A is the one to be regenerated), the ion exchanger is isolated from the pipeline network depicted in bold by automatically closing respective valves. That is the last step controlled by the process control unit before handing over to the regeneration control unit. The regeneration control unit actuates the valves in the other lines for introducing transport water and for transporting the granular material (anion and cation resins) from the ion exchange unit 10 to the regeneration unit 30.

Via lines 31, 32 demineralized water is introduced into ion exchanger 10A as transport water to drain out the anion and cation resins from the ion exchanger 10a via lines 33, 34. The exhausted cation and anion resin 34 is fed into the water transport line using a jet pump or an ejector 35, which is also fed with water 36,37 from line 3. Inside the regeneration unit, the regeneration is performed in a known manner, which is briefly described in the following.

The two types of resin are first separated by feeding water from the demineralized water recirculation buffer tank to the resin separation column from below using the demineralized water distributor pump. During the separation process, the cation resin settles in the lower part of the resin separation column, while the anion resin settles above it. After the cation and anion resins have been successfully separated, the anion resin from the resin separation column is transferred to an anion regeneration tank. The cation resin can either be transferred to a cation regeneration tank or directly regenerated in the separation column. This resin transfer process is terminated when the separation zone has been completely drained and only anion resin remains in the resin separation column. The parallel regeneration of the two separate resins now begins. The wastewater contaminated with regenerant that emerges from the resin separation column and the anion and cation regeneration is fed to a neutralization system. Diluted hydrochloric acid is used to regenerate the cation resin, diluted NaOH acid is used to regenerate the anion resin. At the end of the timed regeneration, during which the amount of regenerant introduced into the resin separation column as well as into the anion regeneration is monitored by the regeneration control unit, the respective regenerant feed is stopped. The regenerated anion resin is then pre-washed using demineralized water. Following the prewash of the regenerated anion resin, the prewash of the regenerated cation resin is carried out in a similar manner.

The regeneration unit is then ready for the next regeneration. The resin can be transported back to ion exchanger 10A or to another ion exchanger in the electrolysis plant. that is again controlled by the regeneration control unit using lines 38, 39. In this embodiment anion and cation resin are sequentially transported using transport water through lines 38, 39 and mixed afterwards inside the ion exchanger 10a by introducing flushing air 40, 41 into the respective ion exchanger.

The regeneration unit 30 is connected to systems 29 for chemical storage and wastewater treatment.

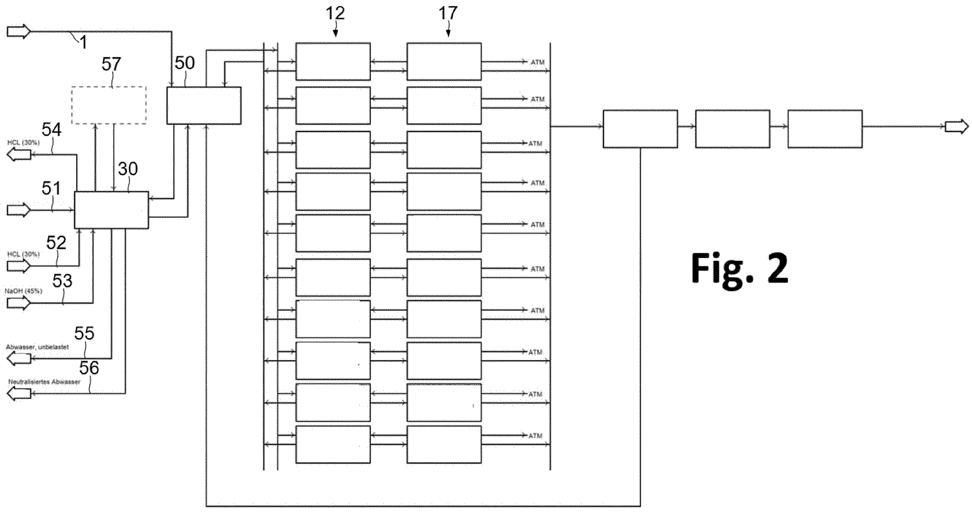

Figure 2 shows a centralized polishing and regeneration system for a large electrolysis plant. In the drawing, ten electrolysis units 17 are shown. There may be even more, e.g. from 50 or 500 electrolysis units 17 in the plant. Preferably, all electrolysis units 17 are identical and comprise e. g., 2 to 20 electrolysis stacks or electrolysis stack assembly systems. Each electrolysis unit 17 has its dedicated O2/water separator 12 and is connected to a central water polishing cycle 50 and a likewise central regeneration unit 30.

The regeneration unit 30 needs several feed streams i.e., low-pressure nitrogen 51, HCl 52, NaOH 53. Effluents are HCl, clear wastewater 55 and neutralized wastewater 56. With the help of the regeneration unit 30, the mixed bed ion exchangers of several electrolysis plants can be integrated and regenerated. In the example shown, to increase the utilization of the regeneration unit, the dimensions of the pipes and equipment were chosen so that the regeneration unit 30 can successively regenerate the mixed bed ion exchangers of a second centralized polishing system 57 of a second electrolysis plant.

## Claims

1. Process for producing hydrogen by electrolysis of water in an electrolysis plant
- comprising
- multiple electrolysis stacks (17),
- each electrolysis stack comprising multiple electrolysis cells,
- a water polishing cycle (25, 7, 8,9, 11, 13, 16) comprising an ion exchange unit (10) comprising at least two mixed bed ion exchangers (10A, 10B) containing a mixture of two granular materials, an anion resin and a cation resin,
**characterized in that**
- in normal operation, in the water polishing cycle
- mixing (5) water (4, 24, 25) to be polished from different electrolysis units and leading (25, 7, 8, 9) the mixture to the ion exchange unit (10) and
- leading demineralized water (11) from the ion exchange unit (10) to the electrolysis stacks,
- in a regeneration mode automatically running a regeneration process controlled by a regeneration control unit and comprising
- stopping the purifying operation of a mixed bed ion exchanger (10A, 10B) to be regenerated by disconnecting the mixed bed ion exchanger (10A, 10B) to be regenerated from the water polishing cycle (8, 9, 11),
- emptying the mixed bed ion exchanger by transporting (33, 34, 35) the granular materials from the mixed bed ion exchanger to be regenerated by a stream of demineralized water to a regeneration unit (30),
- in the regeneration unit (30),
- separating the granulate materials in a separation vessel,
- removing anion resin from the separation vessel,
- transporting the removed anion resin into an anion regeneration vessel,
- treating the anion resin in the anion regeneration vessel by an anion regeneration agent to produce regenerated anion resin,
- treating the cation resin in the separation vessel or in a dedicated cation regeneration vessel by a cation regeneration agent to produce regenerated cation resin,
- after finishing regeneration or after emptying the mixed bed ion exchanger refilling the mixed bed ion exchanger (10A, 10B) by
- transporting regenerated anion resin and regenerated cation resin by demineralized water to the mixed bed ion exchanger (10A, 10B) in regeneration and
- taking the mixed bed ion exchanger (10A, 10B) back to operation by connecting it to the polishing cycle (8, 9, 11).

2. Process according to claim 1, the regenerated anion resin and regenerated cation resin being remixed before taking back the ion exchanger into operation
- in the regeneration unit (30) before being transported to the mixed bed ion exchanger to be regenerated and/or
- in the mixed bed ion exchanger (10A, 10B) to be regenerated.

3. Process according to claim 1 or 2, wherein all the steps are conducted automatically by respective valves and pipelines, in particular
- isolating the mixed bed ion exchanger to be regenerated from the water polishing cycle,
- transporting anion resin by hydraulic transport using demineralized water to the anion regeneration tank,
- introducing anion regeneration agent into the anion regeneration tank,
- transporting cation resin by hydraulic transport using demineralized water to the anion regeneration tank,
- introducing cation regeneration agent into the separation tank or the cation regeneration tank,
- stopping the feed of the regeneration agents,
- transporting either regenerated mixed resins or regenerated anion resins and regenerated cation resins separately to the mixed bed ion exchanger in regeneration mode and
- reconnecting the regenerated mixed bed ion exchanger to the polishing cycle and taking it into operation.

4. Process according to any of the preceding claims automatically controlling the respective valves and all switching steps in the regeneration process by an integrated control system.

5. Process according to any of the preceding claims comprising multiple electrolysis stacks being connected to a common water polishing cycle.

6. Process according to any of the preceding claims, wherein the multiple electrolysis stacks are grouped into electrolysis units, each electrolysis unit comprising a portion of the multiple electrolysis stacks.

7. Process according to any of the preceding claims, wherein
- during emptying the mixed bed ion exchanger at least a portion of the anion resin and/or at least a portion of the cation resin taken from are introduced into a used anion buffer storage or into a used cation buffer storage respectively and/or
- during refilling the mixed bed ion exchanger at least a portion of the regenerated anion resin and/or at least a portion of the regenerated cation resin from a regenerated anion buffer storage or from a regenerated cation buffer storage respectively.

8. Electrolysis plant for producing hydrogen by electrolysis of water
- comprising
- multiple electrolysis stacks (17),
- each electrolysis stack comprising multiple electrolysis cells,
- a water polishing cycle (25, 7, 8,9, 11, 13, 16) comprising an ion exchange unit (10) comprising at least two mixed bed ion exchangers (10A, 10B) containing a mixture of two granular materials, an anion resin and a cation resin,
**characterized by**
- means for mixing (5) water (4, 24, 25) to be polished from different electrolysis units and for leading (25, 7, 8, 9) the mixture to the ion exchange unit (10) in normal operation and
- for leading demineralized water (11) from the ion exchange unit to the electrolysis stack
- means for automatically running a regeneration process controlled by a regeneration control unit in a regeneration mode and comprising
- means for stopping the purifying operation of a mixed bed ion exchanger (10A, 10B) to be regenerated by disconnecting the mixed bed ion exchanger (10A, 10B) to be regenerated from the water polishing cycle (8, 9 11),
- means for emptying the mixed bed ion exchanger by transporting (33, 34, 35) the granular materials from the mixed bed ion exchanger to be regenerated by a stream of demineralized water to a regeneration unit (30),
- the regeneration unit (30) comprising,
- a separation vessel for separating the granulate materials,
- means for removing anion resin from the separation vessel,
- means for transporting the removed anion resin into an anion regeneration vessel,
- means for treating the anion resin in the anion regeneration vessel by an anion regeneration agent to produce regenerated anion resin,
- means treating the cation resin in the separation vessel or in a dedicated cation regeneration vessel by a cation regeneration agent to produce regenerated cation resin,
- means for - after finishing regeneration or after emptying the mixed bed ion exchanger - refilling the mixed bed ion exchanger (10A, 10B) by
- transporting (38) regenerated anion resin and regenerated cation resin by demineralized water to the mixed bed ion exchanger (10A, 10B) in regeneration and
- taking the mixed bed ion exchanger (10A, 10B) back to operation by connecting it to the polishing cycle (8, 9, 11).
